# EUROPEAN PATENT SPECIFICATION

(11) **EP 3 289 487 B1**
(45) Date of publication and mention of the grant of the patent: **21.10.2020**
(21) Application number: 16721129.1
(22) Date of filing: 29.04.2016
(51) Int. Cl.: G06F 16/951, G06Q 30/06

(54) **COMPUTER-IMPLEMENTED METHODS OF WEBSITE ANALYSIS**
COMPUTERIMPLEMENTIERTES VERFAHREN ZUR WEBSITEANALYSE
PROCÉDÉS MIS EN OEUVRE PAR ORDINATEUR POUR L'ANALYSE DE SITE WEB

(30) Priority: 01.05.2015 GB 201507530
(43) Date of publication of application: 07.03.2018
(73) Proprietor: Salesoptimize Limited, Dublin D01 Y300 (IE)
(72) Inventor: AHERN, Colm, Dublin 15 (IE); FULHAM, Elizabeth, Dublin 7 (IE)
(74) Representative: Hanna Moore + Curley
(86) International application number: PCT/EP2016/059680
(87) International publication number: WO 2016/177646

(56) References cited:
- US-A1- 2005 262 063
- US-A1- 2012 198 056
- Anonymous: "All Pro Features | BuiltWith", builtwith.com, 8 April 2015 (2015-04-08), XP055295277, Retrieved from the Internet: URL:http://web.archive.org/web/20150408081 925/http://trendspro.builtwith.com/pro-fea tures [retrieved on 2016-08-12]
- Anonymous: "security - How To Hide From BuiltWith? - Webmasters Stack Exchange", Stackexchange.com, 16 February 2015 (2015-02-16), XP055295275, Retrieved from the Internet: URL:http://webmasters.stackexchange.com/qu estions/32023/how-to-hide-from-builtwith/3 2026#32026 [retrieved on 2016-08-12]
- Anonymous: "How to identify which e-commerce platform a website is using - Quora", quora.com, 30 April 2012 (2012-04-30), XP055295279, Retrieved from the Internet: URL:https://www.quora.com/How-can-you-iden tify-which-e-commerce-platform-a-website-i s-using [retrieved on 2016-08-12]
- Anonymous: "How accurate is BuiltWith? - Quora", quora.com, 28 July 2014 (2014-07-28), XP055295294, Retrieved from the Internet: URL:https://www.quora.com/How-accurate-is- BuiltWith [retrieved on 2016-08-12]

## Description

### FIELD OF THE INVENTION

This invention relates to computer-implemented website analysis techniques for analysing how a website has been built and structured. In particular, the invention relates to qualitative techniques for identifying an ecommerce website from a search of websites on the world wide web by analysing how it interacts with a browser and how it is used, and to quantitative techniques relating to the traffic it generates. A particular goal of the present invention is to identify ecommerce websites with an online store which have been built using a customized or bespoke programming platform.

### BACKGROUND

Website analysis techniques usually require a human user to determine whether a website sells goods or services online. However, manual searching or browsing for such websites is time-consuming. A web crawler, "spider", or software agent can be used to perform a search of the world wide web to identify websites from the millions of websites that now exist, and which of them are actual ecommerce stores. Typically, this involves searching the uniform resource locators (URLs) which identify a website's address and top level domain, as well as the associated hyper text markup language (html) metatags which are descriptors about the site not normally visible to an internet user. A problem in the art is that sometimes it is still not always obvious to a web crawler or software agent that a site is an ecommerce store, based on a top level analysis. In order to determine whether a site is in fact an ecommerce website may require actually opening the site, an analysis of html used to build the pages of the website, and some site navigation between pages to make the conclusion that the website is in fact an online store. For instance, the web crawler could have identified a blog discussing an online store or a brochure website, neither of which actually sells goods online. Features such as a link to a "shopping cart", for instance as first described in EP 0,784,279A, a summary of a cart's contents, or links to allow website visitor to add an item to a cart are the obvious identifiable indicators that a website is in fact an ecommerce store. However, the disadvantage of this approach is that opening multiple individual sites and searching within them before returning a result is also time-consuming, when searching through a very large number of websites.

Proprietary software applications exist for an analysis of what technologies were used to build a website, which can identify the type of shopping cart technology (e.g. WooCommerce, OpenCart, Magento, Zen Cart, PrestaShop, Shopify, Demandware and ATG Web Commerce, etc.) a website uses. The majority of ecommerce websites have been built using one of these proprietary or open source shopping cart technologies, and can be identified quite easily as it is a straightforward process for a search algorithm to determine if a website is using one or other of the known ecommerce platforms.

Conversely, it is not as straightforward for a search algorithm to determine if a website was built using a customized programming approach. Customized or bespoke ecommerce platforms are commonly used by some of the very large on-line vendors, with multiple product lines, payment systems and delivery and fulfilment options. The checks used by the web crawler and search algorithm need to be much more exhaustive than those for identifying known ecommerce platforms, and may include an analysis of hypertext transfer protocol (HTTP) headers, cookies, and embedded code such as JavaScript and cascading stylesheets. When conducting a technology landscape analysis of ecommerce websites, it is important not to miss out on data from on-line vendors simply because the search algorithm did not identify a particular website as an ecommerce website. The present invention seeks to overcome this problem by providing a robust and efficient search algorithm which can search for, target and identify the most relevant ecommerce websites very quickly, and provide relevant and accurate output that can then be used as input for other applications used to analyse the data, which applications comprise business methods and are not part of the present application.

The current state of the art is represented by US 8,452,865 B (Google, Inc.), US 2005/0120045 A (Klawon), and US 2012/0198056 A (Shama).

### SUMMARY OF INVENTION

The present invention provides computer-implemented methods and a system for analyzing a plurality of websites identified by a web crawler or software agent, with a view to outputting data describing only those websites which have been analyzed and identified as having evidence of the existence of ecommerce functionality, with an online store that have been built using a customized or bespoke programming platform, in accordance with claims which follow.

### BRIEF DESCRIPTION OF THE DRAWINGS

Fig. 1 is a flowchart of a first process of top level analysis of uniform resource locators (URLs) in accordance with an example of the invention;
Fig. 2 is a flowchart of a second process of pre-filtering and key data extraction in accordance with an example of the invention;
Fig. 3 is a flowchart of a third process of markup language analysis of a website in accordance with an example of the invention;
Fig. 4 is a flowchart of a fourth process of analysis of cookies and HTTP headers associated with a website, in accordance with an example of the invention;
Fig. 5 is a flowchart of a fifth process showing how existing data about other websites is used to determine if an ecommerce website identified in previous processes is part of a wider family of websites;
Fig. 6 is a flowchart of a sixth process showing a method that classifies an identified ecommerce website into a particular merchant segment, indicating a turnover bracket;
Fig. 7 is a high-level diagram showing ways in which the sixth process of the invention may be applied.

### DETAILED DESCRIPTION

The invention provides a computer-implemented method which is embodied in a website analysis algorithm executing at a client or a server, and in an application programming interface (API) that is configured to interact with identified websites to provide a deeper level of analysis. The algorithm accepts a uniform resource locator (URL) as input. The URL represents the website address, with a unique name and top level domain, such as ".com", ".co.uk", ".ie", etc. The URL data will have been extracted from the world wide web by means of a web crawler or software agent in a known manner which will not be described. The base data could be provided in real time by a web crawler service or the base data could have been downloaded into a database which is interrogated. The first basic input data to be searched and analysed by the algorithm therefore comprises a listing of URL data. This data may also include associated metadata, including metatags, metrics, and hypertext markup language (html) which would not normally be visible when visiting the site with a web browser, but which is nevertheless "invisibly" associated with the "visible" URL, as well as using routing protocols such as hypertext transfer protocol (HTTP) attributes associated with the URL, which again are normally invisible to the user of a web browser. Cookies associated with a website may be extracted and analysed as these may contain user session tracking data or user behaviour data. HTTP headers associated with the website may also be extracted as these may contain data relevant to the algorithm.

The purpose of the algorithm is primarily to determine if a website is:
- An ecommerce store, *and assuming it is an ecommerce store:*
- If the store was built using a customized programming platform, as opposed to a known standard or proprietary or open-source ecommerce platform.

A primary objective of the invention is therefore to identify if a website is an ecommerce store which is developed using customized programming, and without a known proprietary or open-source ecommerce platform. This task of identification may be exercised only after a website is deemed not to have been built using a known platform.

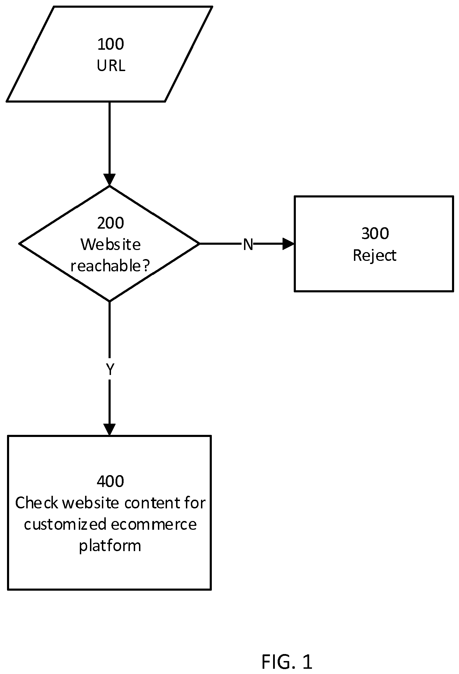

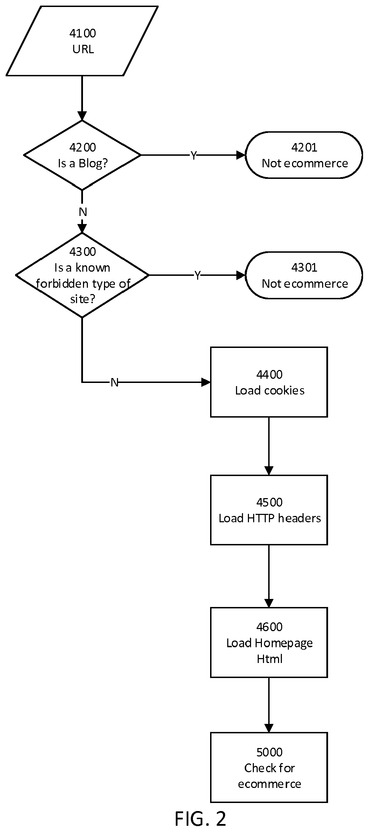

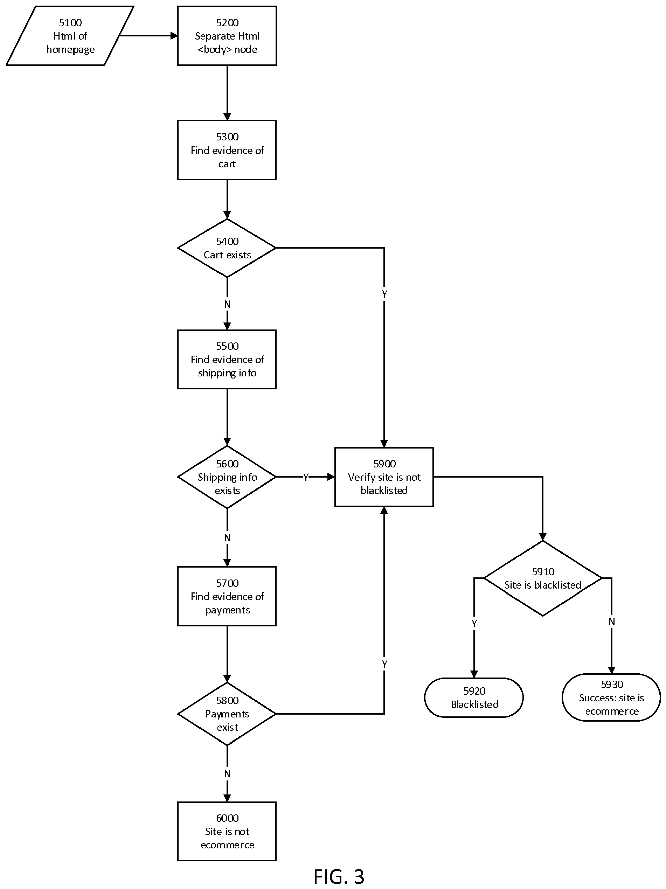

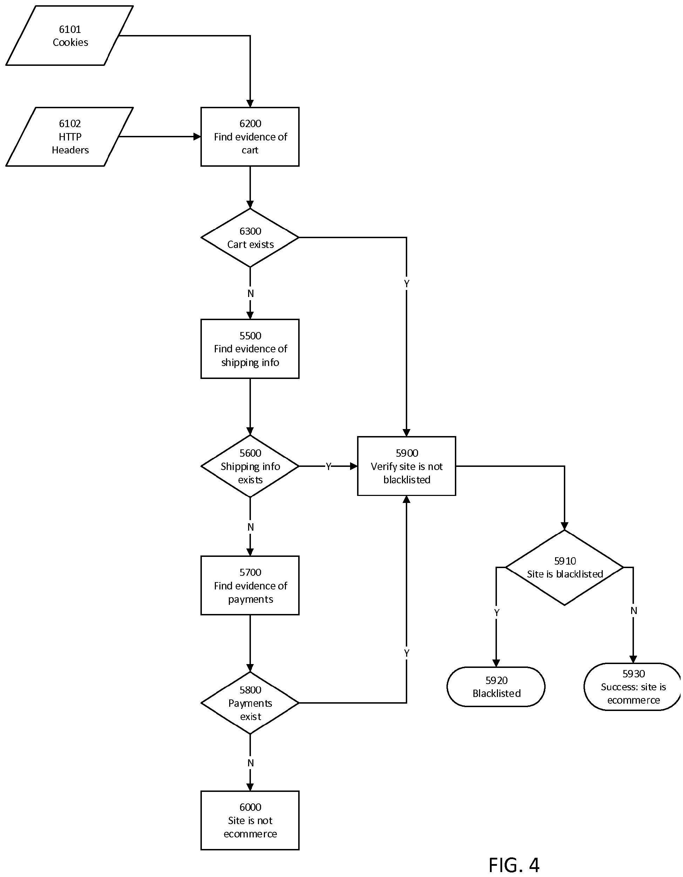

At this first pass stage, as shown in Figs. 1 and 2 and described in further detail below, it is desirable to first of all filter out candidate websites that are clearly blogs (4200) or are to be blacklisted (4300), or are not worth including in the subsequent analysis as they have a very low probability of being ecommerce websites, which process is shown in Fig. 2. Thus the input data may if desired be filtered in a first pass so that a certain targeted segment of the input data is subject to more detailed analysis in a second pass, described in more detail below with reference to Figs. 3 and 4. It should be noted that the algorithm also has the capability to identify over 160 known ecommerce platforms, in a known manner.

What is relevant during the second pass processes is the check for the "unknown" or customized platforms which occurs only after checking for evidence of the known platforms in the searched data. It is this feature which provides the key benefit to end users of being able to spot ecommerce stores, including some of the most important larger on-line vendors who typically build their websites using a customized approach. Smaller on-line vendors can set up and build an ecommerce website quite easily using a known standard or proprietary website design platform, having full shopping cart functionality and payment systems interface, including credit cards and PayPal, without very much programming knowledge. These smaller on-line vendors would be considered to form "the long end of the tail" with generally quite small product inventories or filling very specialized product niches, whereas larger on-line vendors would have very large product ranges and much higher traffic.

A user interface may be provided by means of a suitable client application for the user to interact with the search algorithm processes, for example to input keywords or search parameters, and for manipulating the search output.

A merchant segmentation scheme may be used to enable the user to rank identified ecommerce websites in terms of estimated range of annual online turnover, for further analysis.

This functionality is of particular use when a human needs to analyse hundreds or thousands, or millions, of URLs. The algorithm can provide a user with a focussed search result in approximately 2-6 seconds. Depending on network latency this may take a longer or shorter period of time. The search results may provide raw data input to another application, which may parse and analyse the data further before presenting a final output.

A search result enrichment scheme may be used to add further relevant data to data that is extracted from the search results, including website data, competitor data, payment platform data etc. in a known manner which is not part of the present invention.

Typically, a user will first of all enter search terms with a view to targeting ecommerce websites that may be active in a particular area of commerce, with a view to narrowing down the search results, although this is not essential.

For example, up to 20 search terms or keywords corresponding to products offered for sale may be entered. If a user wishes to find websites that are relevant to cycle shops, the entered search terms could for example be as follows:
"bikes, bicycles, kids bikes, helmets, cycling gear, bike components, men's bikes, ladies bikes, cycling shoes, cycling jerseys, cycling clothing"

The user may then specify a particular ecommerce platform, customized platforms only, or "all ecommerce platforms".

A particular geographic domain may be specified by selecting particular country names, or "all countries", and any one or more of a particular top level domain, e.g. ".com", ".co.uk", ".ie", or all top level domains.

A particular delivery channel or courier company may be specified by selecting particular couriers, e.g. DHL, UPS etc, as further search criteria to narrow down the results.

Methods according to the present invention will now be described with reference to preferred examples of the present invention as shown in Figs. 1 to 4.

The intelligence of the algorithm will be embedded in a dynamic-link library (DLL). When the algorithm has to interact with another program, a website or mobile application, for example by opening the website to search deeper within the data comprising the website, such as html strings, hypertext links, plain text content and images, the approach will be via an Application Programming Interface (API). The API will act as a wrapper around the algorithm to allow multiple types of programs interact with it. The API accepts the same input as the algorithm (i.e. a URL), and a response to the client application described above which can be easily parsed. How the result is displayed within the client application will not be described in detail. Results from the API are returned in JavaScript Object Notation (JSON) format.

With reference to Fig. 1 of the drawings, a first process of top level analysis of uniform resource locators (URLs) will be described.

A URL is the input [100] into the algorithm. This is the first website address of the site the algorithm will attempt to assess.

The first objective is to determine [200] if the website is reachable. This is done by programmatically loading the homepage.

If the website cannot be loaded and is not reachable, the site is rejected [300] by the algorithm. This indicates a site is not ecommerce.

If the website is reachable, the next step is to check the website [400] to see if it is a customized ecommerce platform. This is a series of checks which are executed on various attributes of the site. Typically, the answer lies within the HTML "body" tag. However, occasionally the algorithm needs to go deeper than only a check of HTML metadata to make a determination as to whether the ecommerce site has been built with standard or proprietary website design software or might have been built with customized ecommerce software.

With reference to Fig. 2 of the drawings, a second process of pre-filtering and key data extraction will be described.

The URL pointing to the site is fed as the input [4100] into the algorithm.

As blogs form a huge part of the internet, the algorithm checks if the URL [4200] is a blog before proceeding any further. The HTML of the homepage is analysed. Many of the well-known blogging platforms are searched for at this point. There are lexical indicators which lead the algorithm to believe the site is a blog. If the site is determined to be a blog, it is filtered out and not deemed to be ecommerce [4201]. This filtering functionality is executed at the early stages of the algorithm to allow more rapid confirmation of sites that do not need to be analysed for the presence of ecommerce functionality and activity.

There are categories of sites which the algorithm rejects or blacklists [4300] as part its pre-filtering process, or in a later filtering process at [5900] described below. Categories of sites banned for the purpose of further ecommerce checks include but are not limited to the following: news, video streaming, sites containing pornographic material, political websites, shopping directories, online gaming, consultancy, debt agencies, radio, social media, search engines, message boards, law firms, online loan brokers, property websites, web hosting providers, accommodation websites. When a site falls into one of the banned categories, the algorithm returns a non-ecommerce answer to the client application and no further checks are made. Where a site does not appear to fall into the banned list of categories, the algorithm proceeds.

Key data associated with websites of interest that have not been excluded are extracted for further analysis.

Site cookies are loaded [4400] into a collection. The algorithm may need to access these values further on in the process. For now, names and values of each cookie are loaded into a collection in memory.

Hypertext transfer protocol (HTTP) headers are loaded [4500] into a collection. The algorithm may need to access these values further on in the process. For now, the name and values of each header are loaded into a collection in memory.

The website may be opened by the API and the homepage html is loaded [4600] into memory. This includes everything between the <html> tags in the source of the web page. References to "html" herein include other common markup languages in use including standard generalized markup language (sgml), extensible hypertext markup language (xml, xhtml), security assertion markup language (saml), etc., and associated document type definitions (DTD). A human can see the same content that is loaded by viewing the site in a web browser, right-clicking on part of the text in the page, and clicking "view source" (the same approach is across all web browsers on all operating systems). The html includes meta tags, references to JavaScript files, stylesheets, embedded script tags, image references, and the text that appears on the web page itself. It is fundamental to the algorithm to be able to access the html code of the web pages comprising the website, as regular expressions containing various lexicons pertaining to ecommerce stores are run as part of the process to determine a result.

The process to check a website for ecommerce functionality at step [5000] encompasses the running of regular expressions containing relevant lexicons against the html of a page, stylesheets, JavaScript, cookie names and values, and HTTP header names and values. The exact approach which is used depends on the outcomes of various checks. Figure 3 and Figure 4 show the two avenues which may occur to determining the ecommerce store status of the website.

The html of the home page is assumed to be already loaded into the algorithm at this point [5100]. This is the single item of input.

The body tag is central to a html document. This is identified and separated out [5200] of the rest of the html for the web page. It is loaded into an html parser which has the ability to distinguish between html tags, visible content, html attributes (such as id, class, alt etc.).

Evidence of a cart is found [5300] and sometimes indicated by text appearing somewhere in the body tag of the html. A lexicon containing the known used phrases indicating the presence of a cart is applied to the html. When we say "applied", this means checking for the existence of a word, phrase or other combination of characters using a regular expression, or, using either XPATH syntax queries against the xml or html, or JavaScript selectors such as JQuery Selectors. XPATH is a language for selecting nodes within an xml document, similar to file system addressing. The following is an example of one of the regular expressions used in the text matching:
"(\badd[.-_]?(this|item)?[ .-_]?to([.-_])?(shopping)?(cart|basket|bag)\b|\bview[.-_]?(cart|basket)\b|\bshopping[.-_](cart|basket|bag)\b|update[.-_]?(cart|basket|bag|tote)\b|\b(your|my)[.-_]?(cart|basket)\b|(cart|basket)[.-_]?(is)?[.-_]?empty\b|\bitems[.-_]?in(your)?[.-_]?(shopping)?[.-_]?(cartlbasket))"

The above allows the algorithm to quickly identify if a site has any evidence of a cart. A positive text match would result in the algorithm proceeding to the next phase, which would make an attempt to load the cart page. Frequently however, sites do not allow viewing of the cart page unless items have been added into the basket. The algorithm does not add items to a cart electronically. Therefore, the algorithm can still proceed even though the cart page cannot be viewed. The attempt to load the cart page is executed to improve the chances of a positive result.

Beyond the regular expression example above, if it were to produce no matches in the html body tag, a series of more exhaustive checks is executed. These are usually done using XPATH against the homepage html to identify that there is text which clearly indicates the presence of a cart. For example, the following XPATH could be executed against the html document: "//a[contains(@href,'/shoppingcart')]". This would aim to identify anchor tags (sometimes simply called "a tags") which link to a page which contains the phrase "/shoppingcart" in the URL. Several similar style XPATH expressions are run on the page, which also look at the id, class, and sometimes the visual text html node. The same results may also be achieved using an equivalent syntax with JQuery selectors or any other similar JavaScript library offering the ability to select certain nodes of html.

A series of such checks would allow the algorithm to pass the "cart exists" [5400] check, so as to determine that a website has a real and functioning shopping cart platform associated with it.

If a cart is found to exist at [5400], the algorithm runs the html through another parser, along with the URL itself, to check if the site is blacklisted at step [5900].

The algorithm blacklists [5900] certain domains, and types of sites (as mentioned above at step [4300]). At step [5900] these are more stringent checks which can only be executed after the algorithm has analysed the site for ecommerce attributes. For example, a fast food or take out service may have shopping cart functionality, but may be blacklisted. Similarly, logic can include the ability to blacklist other categories of site that could typically fall into the category of ecommerce, such as gambling websites, travel websites, or sites openly selling counterfeit goods.

If the site is deemed [5910] to be blacklisted either specifically because of the URL or based on the nature of the content, it is rejected [5920].

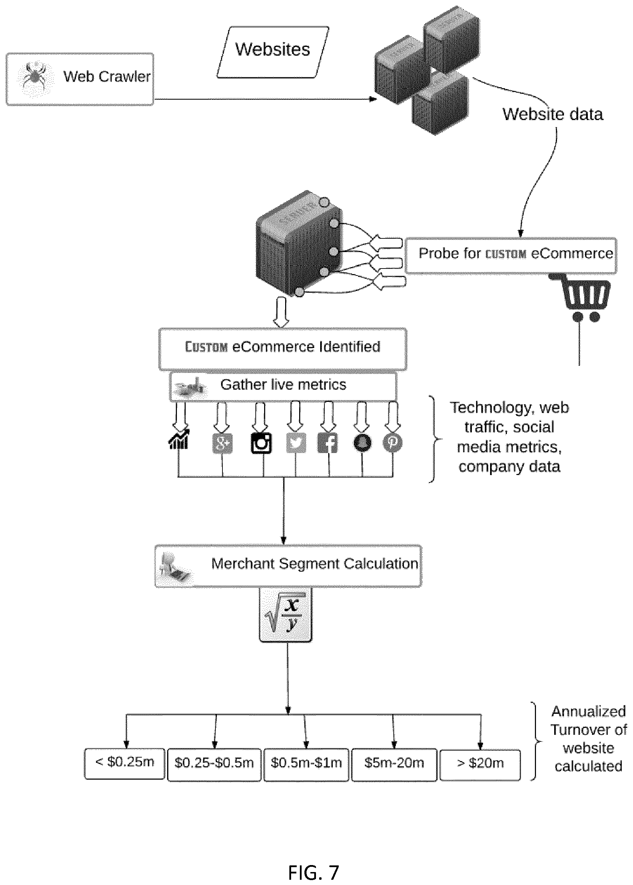

If the site is not deemed to be blacklisted, the site passes [5930] all checks. The status "success" is returned by the algorithm along with the strong assumption or fact that it is built using a customized ecommerce platform. Other details are included in the output of the algorithm as a result of the positive result, but the key differentiating feature of the algorithm is the proper identification of the customized platform. This additional information includes data which is useful to those who might want to know more about a URL. Examples of this additional information returned to the user along with the customized ecommerce platform indication include (but are not limited to): the Alexa ranking (traffic indicator), the age of the site, phone number, contact email address, the payment platforms used, the marketing and analytics tools used, link to the contact page, link to shipping information page, which couriers the site uses, the meta data (e.g. description and keywords), link to Facebook page (if applicable), link to YouTube channel (if applicable), link to Twitter account (if applicable) and other social media channels (see also Fig. 7, below). Such additional data is captured for the purpose of enriching the search results to be output to the client application when this is desired.

If step [5400] indicates that a cart did *not* exist, or does not find evidence of its existence, but there are other less stringent indications that the site might still be an ecommerce store, further features of such a store are checked. By further features, we mean if the site has for example identifiable delivery information [5500] and/or payments information [5700]. There are certain lexicons that can be run against the text of the shipping information page that would clearly indicate that a site delivers what it sells.

The shipping information is analysed [5600] by applying the appropriate lexicon pertaining to shipping information. If there is a clear indication that the site offers delivery of what it sells, it is deemed to be an online store. The next step is to pass through the blacklisted site check described earlier [5900].

Where no evidence of shipping information exists, there may still be evidence of payments being accepted on a site. Hyperlinks are analysed on the html to look for [5700] payment information. Sometimes this information exists within a "terms and conditions" page. These pages are loaded into memory in the same way that the home page is loaded (similar to step [4600]). Checking for payments includes two approaches.
Approach 1: referencing of a facility that offers payments (e.g. either linking to a JavaScript file or embedding a piece of JavaScript which links to a payment gateway)
Approach 2: applying a lexicon through the use of regular expressions which clearly indicates that payments are accepted on the site.

Facilitation of online payments will at this stage be determined [5800] using one of the approaches described in step [5700]. Either the regular expressions produced matches, or, the algorithm will have been able to determine which payment provider or platform the site uses to accept payments (examples would include PayPal, Stripe, ePDQ by Barclaycard, Worldpay). If there is sufficient evidence for payments, step [5900] is executed which will then perform more stringent blacklist checks (as described earlier).

If a site fails [6000] all assessment for evidence of it being an online ecommerce store, a negative result is returned to the end user, indicating that the site is not ecommerce.

Beyond process step [6300], the process steps from [5500 and 5900] onwards in Figure 4 are the same as described in Figure 3. The initial steps to identify if a site contains evidence of a cart are what differentiates the approach.

Fig. 4 describes a process of analysis of cookies and HTTP headers associated with a website, whereas Fig. 3 describes process of html analysis of a website.

With reference to Fig. 4, a collection of cookies is loaded [6101] into memory at this point. These form part of the input into step [6200] which will take an alternative approach to finding evidence of a shopping cart.

A collection of HTTP Headers from the response after loading the website have been loaded [6102] into memory at this point. These form part of the input into process [6200] along with the cookies collection [6101].

If no cookies exist, the algorithm needs to run a strict regular expression against the content of the HTTP headers which clearly indicates the purpose of the web server. This is a rare scenario, but has been known to occur. For example, if a site has no evidence within the html that it is an ecommerce site, the headers must contain a value with an obvious phrase such as "Ecommerce Server", which would indicate the purpose of the site.

Preferably, the website will have created cookies, which the algorithm will at this stage be able to examine. Frequently a website will contain a cookie using a phrase like "cart", "basket". Although not as common, the algorithm can spot indications that a cookie contains a total value of the cart.

A positive determination [6300] of the existence of a cart from either HTTP headers or cookies will determine how the algorithm proceeds. This is identical to what happens in Figure 3. Either of steps [5500] or [5900] is executed. The subsequent steps are described in detail in the relation to Fig. 3 [5100] to [6000].

The above detailed description has outlined methods to identify websites which are ecommerce shops however developed using a customized, bespoke programming approach. Once identified, much useful marketing information can be gleaned from further analysis of customized websites, which are considered as "high value targets" in ecommerce market research, including identification of whether a particular site belongs to a family of websites which we can identify from previous analysis, and, the market segmentation of a website site based on annualized turnover, which can be calculated or estimated.

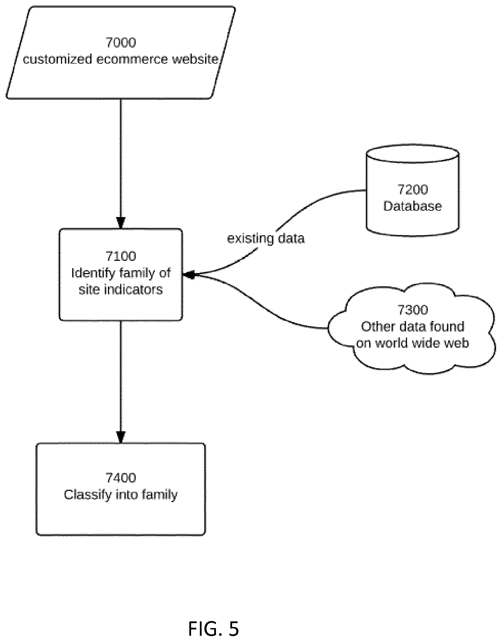

Fig. 5 shows a further process that can advantageously be executed after a website has been identified as ecommerce [7000], and that has been built using customized or bespoke programming and not using a standard platform. This may also follow from the result that was determined in Fig 3 and Fig 4, step [5930].

As a result of carrying out the process of the invention by repeated internet crawling, a database can be established [7200] which contains data from millions of websites which have already been identified as falling into the category of customized ecommerce websites.

Each customized ecommerce website can then be analyzed to see if it might be part of a family of interrelated websites. The method identifies [7100] if the wider family of websites can be grouped together if they are identified as operating under the same company entity. A "wider family" of websites means that several websites can actually be operating under the one company entity. For example, wiggle.com might be one domain, but they might also operate under wiggle.fr, wiggle.co.uk, wiggle.pt, widdle.fr, wiggle.de etc. Or a site might for example have a URL of www.abc.com, but based on attributes of this website and based on the analysis of millions of websites already to date, the method can conclude if a sites such as www.abc.co.uk, www.abc.de, mobile.abc.com and www.abc.fr are indeed operating under the same company. Other data may be found by trawling the world wide web [7300] to augment the search for interrelated families of websites belonging to the category of customized ecommerce websites. Using the combined data from the analysis, determination if the website is part of a wider family of websites which form part of the same company entity using a combination of some or all of the following data points: the top level domain; the company registration number indicating the registered company entity; the company contact data where it has been determined that the CEO or business owner is the same person; the company contact data where the email is the same; social media links; address data in common. The database [7200] can then be updated accordingly with family data.

The process may end by classifying interrelated families of websites [7400].

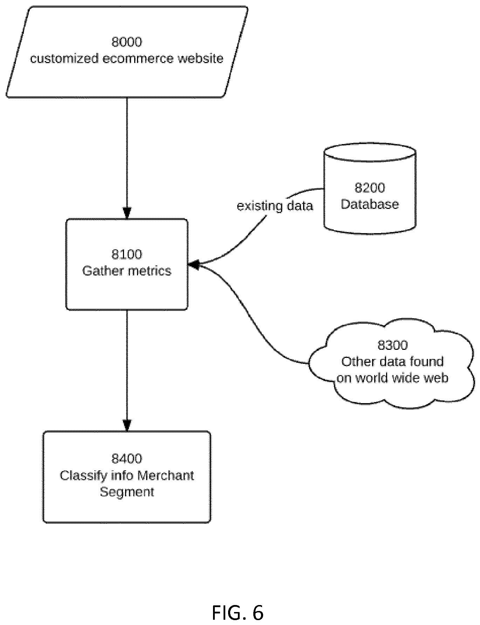

Figs. 6 and 7 show a further process [8000], which may follow from that described with reference to any of Figs. 3, 4, 5 above.

As a result of carrying out the process of the invention by repeated internet crawling, a database can be established [8200] which contains data from millions of websites which have already been identified as falling into the category of customized ecommerce websites. Using this data, and by analyzing features of the newly identified customized ecommerce website, the method will use existing data and gather live metrics to classify [8400] the website in terms of merchant segment.

Merchant segment for the purpose of this method means the estimated range of annualized online turnover of a customized ecommerce website. As shown in Fig. 7, a merchant segmentation scheme may be used to enable the user to rank websites in terms of estimated range of annual online turnover, which are to be analyzed., e.g. in five categories using ranges such as: Less than $0.25m; $0.25m - $0.5m; $0.5m - $1m; $1m - $5m; $5m - $20m; greater than $20m. As shown in Fig. 6, The inputs into this method combine metrics gathered [8100] from website scans, combined with new or live data which can be extracted or scraped [8300] from various sources on the World Wide Web. Examples of such data (if the data is known) could be as follows, but is not limited to: the country of operation; age of the website; website traffic statistics; social media footprint on the world wide web; the number of related websites identified as being part of the same family of websites as identified in step [7100]; the hosted location of the website; the business country of the website; the number of employees working in a company; the country as indicated by the top level domain; technology features and known costs of various technology used by the website; the reported turnover of a company. Thus, it will be seen that the present invention provides many uses which amount to a very powerful tool for analyzing ecommerce at any scale, even globally across the entire world wide web.

The key benefit to the end user of the client application is to be able to determine not only what websites are online ecommerce stores, but to be able to identify those which are difficult to identify in any kind of automated manner due to the customized nature of the code used to build the website. This brings significant time savings to businesses that have a specific requirement to identify all of the relevant companies trading online, in their particular sector. These websites are otherwise very difficult to find and identify properly given the fact that there are over 930+ million active websites in the world wide web today.

Although specific embodiments have been illustrated and described herein for purposes of description of the preferred embodiment, it will be appreciated by those of ordinary skill in the art that a wide variety of alternate and/or equivalent implementations may be substituted for the specific embodiment shown and described without departing from the scope of the present invention. Those with skill in the art will readily appreciate that the present invention may be implemented in a very wide variety of embodiments. This application is intended to cover any adaptations or variations of the embodiments discussed herein. Therefore, it is manifestly intended that this invention be limited only by the claims.

References herein in the above description to an "algorithm" should be interpreted in a general sense to a computer-implemented method or series of logical method steps implemented by a programmed processor or computer, with or without user input.

The words comprises/comprising when used in this specification are to specify the presence of stated features, integers, steps or components but does not preclude the presence or addition of one or more other features, integers , steps, components or groups thereof.

## Claims

1. A computer-implemented method for analyzing a plurality of websites identified by a web crawler or software agent, by analyzing how particular websites have been built and structured to identify target ecommerce websites with an online store that have been built using a customized or bespoke programming platform, comprising the steps of;
analyzing a uniform resource locator (100, 4100) and associated header data (4500, 6102), cookie data (4400, 6101), Javascript files, stylesheets and images identifying a particular website and any descriptor data not including website content by loading any one or more of routing protocol headers, cookies, files and images associated with the website identifiers into memory for subsequent analysis (5000) to find evidence of the existence of ecommerce functionality associated with an online store;
in a first pass (200, 4200), determining whether online store ecommerce functionality is likely to be supported by the website based on said analysis, or if the website is to be excluded (4300, 5920) from further analysis;
in a second pass, analyzing markup language content (4600, 5100) extracted from one or more pages of the website to collect evidence of one or more ecommerce functionalities associated with an online store, comprising;
identifying regular expressions from markup language body tag data associated with ecommerce functionality associated with an online store;
identifying links to other pages that are likely to contain content relevant to ecommerce functionality associated with an online store from markup language tags;
identifying embedded script tags linking to ecommerce functionality associated with an online store;
identifying body nodes within the markup language using XML path language syntax queries or JQuery selector queries relevant to ecommerce functionality associated with an online store;
identifying regular expressions within the markup language that may be evidence of the existence of ecommerce functionality by parsing against a predefined lexicon; and
outputting data describing only those websites which have been analyzed and identified as having evidence of the existence of ecommerce functionality (5930) associated with an online store that have been built using a customized or bespoke programming platform (7000, 8000).

2. The method of claim 1, wherein identifying regular expressions within the markup language that may be evidence of the existence of ecommerce functionality by parsing against a predefined lexicon, comprises any one of;
identifying regular expressions within the any cascading stylesheets that indicate be evidence of the existence of ecommerce functionality by parsing against a predefined lexicon;
identifying regular expressions within the any http cookie values that indicate be evidence of the existence of ecommerce functionality by parsing against a predefined lexicon; or,
identifying regular expressions related to images on a website that indicate be evidence of the existence of ecommerce functionality by parsing against a predefined lexicon.

3. The method of claim 1, wherein analyzing markup language content extracted from one or more pages of the website comprise analyzing (5100) the home page of the website.

4. The method of claim 1, wherein determining whether the website is to be excluded (4300, 5920) from further analysis comprises pre-filtering the plurality of websites to exclude selected categories of websites from further analysis, selected by user-defined input, pre-determined domain names, regular expressions, markup language content, and markup language meta tags, and predetermined visible text or image data.

5. The method of claim 1, wherein determining whether the website is to be excluded from further analysis comprises attempting to open the website to determine if the website is currently reachable (200), and if not, excluding (300) the website from further analysis.

6. The method of claim 1, wherein identifying regular expressions within the markup language that may be evidence of the existence of ecommerce functionality associated with an online store by parsing against a predefined lexicon, comprises parsing meta tags, references to JavaScript files, stylesheets, embedded script tags, image references, and the text that appears on a web page.

7. The method of claim 1, wherein identifying links to other pages that are likely to contain content relevant to ecommerce functionality associated with an online store from markup language tags, comprises using anchor tags.

8. The method of claim 1, wherein identifying links to other pages that are likely to contain content relevant to ecommerce functionality associated with an online store from markup language tags, comprises identifying links navigated to by means of an event such as a click event from all other markup language tags.

9. The method of claim 1, wherein said ecommerce functionality associated with an online store is determined (5400) by evidence of the existence of a shopping cart functionality.

10. The method of claim 1, wherein said ecommerce functionality associated with an online store is determined (5600) by evidence of the existence of shipping information.

11. The method of claim 1, wherein said ecommerce functionality associated with an online store is determined (5800) by evidence of the existence of a payments platform.

12. The method of any one of claims 1 to 11, further comprising a final pre-filtering process to exclude selected categories of websites from further analysis (5900), selected by user-defined input, pre-determined domain names, regular expressions, markup language content, and markup language meta tags, and predetermined visible text or image data.

13. The method of any one of claims 1 to 12, wherein outputting data describing only those websites which have been analyzed and identified as having evidence of the existence of ecommerce functionality (5930) associated with an online store, comprises outputting said data to a database for further analysis, comprising the further steps of;
determining (7100) if a particular ecommerce website is operating as part of a wider family of interrelated websites deemed to be operating under one company entity, or for the purpose of combined revenue generation; and/or
classifying (7400) a particular website or wider family of interrelated websites in terms of merchant segment and/or in terms of calculated or estimated annualized online turnover.

14. A system for analyzing a plurality of websites, identified by a web crawler or software agent, by analyzing how particular websites have been built and structured to identify target ecommerce websites with an online store that have been built using a customized or bespoke programming platform, identified by a web crawler or software agent, comprising a processor, a memory, and software modules loaded in the memory and configured to;
analyze a uniform resource locator (100, 4100) and associated header data (4500, 6102), cookie data (4400, 6101), Javascript files, stylesheets and images identifying a particular website and any descriptor data not including website content by loading any one or more of routing protocol headers, cookies, files and images associated with the website identifiers into memory for subsequent analysis (5000) to find evidence of the existence of ecommerce functionality associated with an online store;
in a first pass (200, 4200), determining whether online store ecommerce functionality is likely to be supported by the website based on said analysis, or if the website is to be excluded (4300, 5920) from further analysis;
in a second pass, analyzing markup language content (4600, 5100) extracted from one or more pages of the website to collect evidence of one or more ecommerce functionalities associated with an online store, comprising;
identifying regular expressions from markup language body tag data associated with ecommerce functionality associated with an online store;
identifying links to other pages that are likely to contain content relevant to ecommerce functionality associated with an online store from markup language tags;
identifying embedded script tags linking to ecommerce functionality associated with an online store;
identifying body nodes within the markup language using XML path language syntax queries or JQuery selector queries relevant to ecommerce functionality associated with an online store;
identifying regular expressions within the markup language that may be evidence of the existence of ecommerce functionality by parsing against a predefined lexicon; and
a client system for receiving output data describing only those websites which have been analyzed and identified as having evidence of the existence of ecommerce functionality (5930) associated with an online store that have been built using a customized or bespoke programming platform (7000, 8000).

15. A computer program which when executing on a processor, performs the method according to any one of claims 1 to 13.

16. The computer program of claim 15, when stored on a computer readable storage medium.

## Patentansprüche

1. Computerimplementiertes Verfahren zum Analysieren mehrerer Websites, die von einem Webcrawler oder einem Software-Agent durch Analysieren, wie bestimmte Websites erstellt und gegliedert wurden, identifiziert werden, um Ziel-E-Commerce-Websites mit einem Online-Shop, die unter Verwendung einer angepassten oder maßgeschneiderten Programmierplattform erstellt wurden, zu identifizieren, das die folgenden Schritte umfasst;
Analysieren eines Uniform Resource Locator (100, 4100) und zugehöriger Kopfdaten (4500, 6102), Cookie-Daten (4400, 6101), Javascript-Dateien, Stylesheets und Bilder, die eine bestimmte Website identifizieren, und jeglicher Deskriptordaten, Website-Inhalt nicht einschließend, durch Laden von Routing-Protokoll-Köpfen, Cookies, Dateien und Bildern, die mit den Website-Kennungen verknüpft sind, in den Speicher zwecks anschließender Analyse (5000), um Nachweise für das Vorhandensein einer mit einem Online-Shop verknüpften E-Commerce-Funktionalität zu finden;
in einem ersten Durchgang (200, 4200) Bestimmen, ob die E-Commerce-Funktionalität des Online-Shops basierend auf der Analyse wahrscheinlich von der Website unterstützt wird oder ob die Website von der weiteren Analyse ausgeschlossen werden soll (4300, 5920);
in einem zweiten Durchgang Analysieren von Markup-Sprachinhalten (4600, 5100), die von einer oder mehreren Seiten der Website extrahiert wurden, um Nachweise für eine oder mehrere E-Commerce-Funktionalitäten, die mit einem Online-Shop verknüpft sind, zu sammeln, was Folgendes umfasst;
Identifizieren von regulären Ausdrücken aus Body-Tag-Daten der Markup-Sprache, die mit der E-Commerce-Funktionalität eines Online-Shops verknüpft sind;
Identifizieren von Links zu anderen Seiten, die wahrscheinlich Inhalte enthalten, die für die mit einem Online-Shop verknüpfte E-Commerce-Funktionalität relevant sind, anhand von Markup-Sprach-Tags;
Identifizieren eingebetteter Skript-Tags, die mit der mit einem Online-Shop verknüpften E-Commerce-Funktionalität verbunden sind;
Identifizieren von Textknoten innerhalb der Markup-Sprache unter Verwendung von Syntaxabfragen der XML Path Language oder von JQuery-Selector-Abfragen, die für die mit einem Online-Shop verknüpfte E-Commerce-Funktionalität relevant sind;
Identifizieren regulärer Ausdrücke innerhalb der Markup-Sprache, die möglicherweise Nachweise für das Vorhandensein von E-Commerce-Funktionalität sind, durch Parsing anhand eines vordefinierten Lexikons; und
Ausgeben von Daten, die nur diejenigen Websites beschreiben, die analysiert wurden und einen Nachweis über das Vorhandensein von E-Commerce-Funktionalität (5930) aufweisen, die mit einem Online-Shop, der unter Verwendung einer angepassten oder maßgeschneiderten Programmierplattform (7000, 8000) erstellt wurde, verknüpft ist.

2. Verfahren nach Anspruch 1, wobei das Identifizieren regulärer Ausdrücke innerhalb der Markup-Sprache, die möglicherweise ein Nachweis für das Vorhandensein von E-Commerce-Funktionalität durch Parsen gegen ein vordefiniertes Lexikon sind, eines der Folgenden umfasst;
Identifizieren regulärer Ausdrücke innerhalb von Cascading Stylesheets, die das Vorhandensein von E-Commerce-Funktionalität durch Parsen gegen ein vordefiniertes Lexikon angeben;
Identifizieren regulärer Ausdrücke innerhalb von HTTP-Cookie-Werten, die das Vorhandensein von E-Commerce-Funktionalität durch Parsen gegen ein vordefiniertes Lexikon angeben; oder,
Identifizieren regulärer Ausdrücke im Zusammenhang mit Bildern auf einer Website, die das Vorhandensein von E-Commerce-Funktionalität durch Parsen gegen ein vordefiniertes Lexikon angeben.

3. Verfahren nach Anspruch 1, wobei das Analysieren von Markup-Sprachinhalten, die aus einer oder mehreren Seiten der Website extrahiert wurden, das Analysieren (5100) der Homepage der Website umfasst.

4. Verfahren nach Anspruch 1, wobei das Bestimmen, ob die Website von der weiteren Analyse ausgeschlossen werden soll (4300, 5920), ein Vorfiltern der mehreren Websites umfasst, um ausgewählte Kategorien von Websites von der weiteren Analyse auszuschließen, ausgewählt durch benutzerdefinierte Eingaben, zuvor bestimmte Domainnamen, reguläre Ausdrücke, Markup-Sprachinhalte und Markup-Sprachen-Meta-Tags und zuvor bestimmte sichtbare Text- oder Bilddaten.

5. Verfahren nach Anspruch 1, wobei das Bestimmen, ob die Website von der weiteren Analyse ausgeschlossen werden soll, den Versuch umfasst, die Website zu öffnen, um zu bestimmen, ob die Website derzeit erreichbar ist (200), und wenn nicht, die Website von der weiteren Analyse ausschließt (300).

6. Verfahren nach Anspruch 1, wobei das Identifizieren regulärer Ausdrücke innerhalb der Markup-Sprache, die durch Parsen gegen ein vordefiniertes Lexikon möglicherweise ein Nachweis für das Vorhandensein einer mit einem Online-Shop verknüpften E-Commerce-Funktionalität sind, das Parsen von Meta-Tags, Verweise auf JavaScript-Dateien, Stylesheets, eingebettete Skript-Tags, Bildreferenzen und den Text, der auf einer Webseite angezeigt wird, umfasst.

7. Verfahren nach Anspruch 1, wobei das Identifizieren von Links zu anderen Seiten, die wahrscheinlich Inhalte aus Markup-Sprach-Tags enthalten, die für die mit einem Online-Shop verknüpfte E-Commerce-Funktionalität relevant sind, das Verwenden von Anchor-Tags umfasst.

8. Verfahren nach Anspruch 1, wobei das Identifizieren von Links zu anderen Seiten, die wahrscheinlich Inhalte aus Markup-Sprach-Tags enthalten, die für die mit einem Online-Shop verknüpfte E-Commerce-Funktionalität relevant sind, das Identifizieren von Links, zu denen mittels eines Ereignisses wie etwa eines Klickereignisses von allen anderen Markup-Sprach-Tags navigiert wird, umfasst.

9. Verfahren nach Anspruch 1, wobei die mit einem Online-Shop verknüpfte E-Commerce-Funktionalität durch den Nachweis des Vorhandenseins einer Warenkorb-Funktionalität bestimmt wird (5400).

10. Verfahren nach Anspruch 1, wobei die mit einem Online-Shop verknüpfte E-Commerce-Funktionalität durch den Nachweis des Vorhandenseins von Versandinformationen bestimmt wird (5600).

11. Verfahren nach Anspruch 1, wobei die mit einem Online-Shop verknüpfte E-Commerce-Funktionalität durch den Nachweis der Vorhandenseins einer Zahlungsplattform bestimmt wird (5800).

12. Verfahren nach einem der Ansprüche 1 bis 11, das ferner einen abschließenden Vorfilterungsvorgang umfasst, um ausgewählte Kategorien von Websites von der weiteren Analyse (5900) auszuschließen, ausgewählt durch benutzerdefinierte Eingaben, zuvor bestimmte Domainnamen, reguläre Ausdrücke, Markup-Sprachinhalte und Markup-Sprachen Meta-Tags und zuvor bestimmte sichtbare Text- oder Bilddaten.

13. Verfahren nach einem der Ansprüche 1 bis 12, wobei das Ausgeben von Daten, die nur diejenigen Websites beschreiben, die analysiert wurden und einen Nachweis über das Vorhandensein von einer mit einem Online-Shop verknüpften E-Commerce-Funktionalität (5930) aufweisen, das Ausgeben dieser Daten in eine Datenbank für die weitere Analyse umfasst, was die folgenden weiteren Schritte umfasst;
Bestimmen (7100), ob eine bestimmte E-Commerce-Website als Teil einer größeren Familie miteinander verbundener Websites betrieben wird, von denen angenommen wird, dass sie unter einer Unternehmenseinheit oder für den Zweck der kombinierten Umsatzgenerierung betrieben werden; und/oder
Klassifizieren (7400) einer bestimmten Website oder einer größeren Familie miteinander verbundener Websites in Bezug auf das Händlersegment und/oder in Bezug auf den berechneten oder geschätzten annualisierten Online-Umsatz.

14. System zum Analysieren mehrerer Websites, die von einem Webcrawler oder einem Software-Agent identifiziert wurden, durch Analysieren, wie bestimmte Websites erstellt und gegliedert wurden, um Ziel-E-Commerce-Websites mit einem Online-Shop, die unter Verwendung einer angepassten oder maßgeschneiderten Programmierplattform erstellt wurden, zu identifizieren, die durch einen Webcrawler oder Software-Agenten identifiziert wurden, das einen Prozessor, einen Speicher und Softwaremodule umfasst, die für Folgendes in den Speicher geladen und konfiguriert sind;
Analysieren eines Uniform Resource Locator (100, 4100) und zugehöriger Kopfdaten (4500, 6102), Cookie-Daten (4400, 6101), Javascript-Dateien, Stylesheets und Bilder, die eine bestimmte Website identifizieren, und jeglicher Deskriptordaten, Website-Inhalt nicht einschließend, durch Laden von Routing-Protokoll-Köpfen, Cookies, Dateien und Bildern, die mit den Website-Kennungen verknüpft sind, in den Speicher zwecks anschließender Analyse (5000), um Nachweise für das Vorhandensein einer mit einem Online-Shop verknüpften E-Commerce-Funktionalität zu finden;
in einem ersten Durchgang (200, 4200) Bestimmen, ob die E-Commerce-Funktionalität des Online-Shops basierend auf der Analyse wahrscheinlich von der Website unterstützt wird oder ob die Website von der weiteren Analyse ausgeschlossen werden soll (4300, 5920);
in einem zweiten Durchgang Analysieren von Markup-Sprachinhalten (4600, 5100), die von einer oder mehreren Seiten der Website extrahiert wurden, um Nachweise für eine oder mehrere E-Commerce-Funktionalitäten, die mit einem Online-Shop verknüpft sind, zu sammeln, was Folgendes umfasst;
Identifizieren von regulären Ausdrücken aus Body-Tag-Daten der Markup-Sprache, die mit der E-Commerce-Funktionalität eines Online-Shops verknüpft sind;
Identifizieren von Links zu anderen Seiten, die wahrscheinlich Inhalte enthalten, die für die mit einem Online-Shop verknüpfte E-Commerce-Funktionalität relevant sind, anhand von Markup-Sprach-Tags;
Identifizieren eingebetteter Skript-Tags, die mit der mit einem Online-Shop verknüpften E-Commerce-Funktionalität verbunden sind;
Identifizieren von Textknoten innerhalb der Markup-Sprache unter Verwendung von Syntaxabfragen der XML Path Language oder von JQuery-Selector-Abfragen, die für die mit einem Online-Shop verknüpfte E-Commerce-Funktionalität relevant sind;
Identifizieren regulärer Ausdrücke innerhalb der Markup-Sprache, die möglicherweise Nachweise für das Vorhandensein von E-Commerce-Funktionalität sind, durch Parsing anhand eines vordefinierten Lexikons; und
ein Client-System zum Empfangen von Ausgabedaten, die nur diejenigen Websites beschreiben, die analysiert wurden und einen Nachweis über das Vorhandensein einer mit einem Online-Shop verknüpften E-Commerce-Funktionalität (5930) aufweisen, die mit einer angepassten oder maßgeschneiderten Programmierplattform (7000, 8000) erstellt wurden.

15. Computerprogramm, das beim Ausführen auf einem Prozessor das Verfahren nach einem der Ansprüche 1 bis 13 durchführt.

16. Computerprogramm nach Anspruch 15, wenn es auf einem computerlesbaren Speichermedium gespeichert ist.

## Revendications

1. Procédé informatique pour analyser une pluralité de sites Web identifiés par un robot Web ou un agent logiciel, en analysant la façon dont des sites Web particuliers ont été créés et structurés pour identifier des sites Web de commerce électronique cibles avec une boutique en ligne qui ont été créés à l'aide d'une plateforme de programmation personnalisée ou sur mesure, comprenant les étapes ;
d'analyse d'un localisateur de ressources uniformes (100, 4100) et de données d'en-tête associées (4500, 6102), de données de cookies (4400, 6101), de fichiers Javascript, de feuilles de style et d'images identifiant un site Web particulier et de toutes données de descripteur n'incluant pas de contenu de site Web en chargeant l'un quelconque ou plusieurs parmi des en-têtes de protocole de routage, cookies, fichiers et images associés aux identifiants de site Web en mémoire pour une analyse supplémentaire (5000) pour trouver des preuves de l'existence d'une fonctionnalité de commerce électronique associée à une boutique en ligne ;
dans un premier passage (200, 4200), de détermination du fait que la fonctionnalité de commerce électronique de boutique en ligne est susceptible d'être prise en charge ou non par le site Web sur la base de ladite analyse, ou si le site Web doit être exclu (4300, 5920) d'une analyse supplémentaire ;
dans un second passage, d'analyse du contenu en langage de balisage (4600, 5100) extrait d'une ou plusieurs pages du site Web pour collecter des preuves d'une ou plusieurs fonctionnalités de commerce électronique associées à une boutique en ligne, comprenant ;
l'identification d'expressions régulières à partir de données d'étiquette de corps de langage de balisage associées à une fonctionnalité de commerce électronique associée à une boutique en ligne ;
l'identification de liens vers d'autres pages susceptibles de contenir du contenu pertinent pour la fonctionnalité de commerce électronique associée à une boutique en ligne à partir d'étiquettes de langage de balisage ;
l'identification d'étiquettes de script intégrées reliant une fonctionnalité de commerce électronique associée à une boutique en ligne ;
l'identification de noeuds de corps dans le langage de balisage à l'aide de requêtes de syntaxe de langage de chemin XML ou de requêtes de sélecteur JQuery pertinentes pour la fonctionnalité de commerce électronique associée à une boutique en ligne ;
l'identification d'expressions régulières dans le langage de balisage qui peuvent être des preuves de l'existence d'une fonctionnalité de commerce électronique par analyse par rapport à un lexique prédéfini ; et
la sortie de données décrivant uniquement ces sites Web qui ont été analysés et identifiés comme ayant des preuves de l'existence d'une fonctionnalité de commerce électronique (5930) associée à une boutique en ligne qui ont été créés à l'aide d'une plate-forme de programmation personnalisée ou sur mesure (7000, 8000).

2. Procédé selon la revendication 1, l'identification d'expressions régulières dans le langage de balisage qui peuvent être des preuves de l'existence d'une fonctionnalité de commerce électronique par analyse par rapport à un lexique prédéfini, comprenant l'une quelconque parmi ;
l'identification d'expressions régulières dans les feuilles de style en cascade qui indiquent des preuves de l'existence d'une fonctionnalité de commerce électronique par analyse par rapport à un lexique prédéfini ;
l'identification d'expressions régulières dans les valeurs de cookie http qui indiquent être des preuves de l'existence d'une fonctionnalité de commerce électronique par analyse par rapport à un lexique prédéfini ; ou,
l'identification d'expressions régulières liées aux images sur un site Web qui indiquent être des preuves de l'existence d'une fonctionnalité de commerce électronique par analyse par rapport à un lexique prédéfini.

3. Procédé selon la revendication 1, l'analyse du contenu de langage de balisage extrait d'une ou plusieurs pages du site Web comprenant l'analyse (5100) de la page d'accueil du site Web.

4. Procédé selon la revendication 1, la détermination du fait que le site Web doit être exclu (4300, 5920) ou non d'une analyse supplémentaire comprenant le pré-filtrage de la pluralité de sites Web pour exclure des catégories sélectionnées de sites Web d'une analyse supplémentaire, sélectionnées par une entrée définie par l'utilisateur, des noms de domaine prédéterminés, des expressions régulières, du contenu de langage de balisage et des étiquettes méta de langage de balisage, et des données de texte ou d'image visibles prédéterminées.

5. Procédé selon la revendication 1, la détermination du fait que le site Web doit être exclu d'une analyse supplémentaire ou non comprenant la tentative d'ouverture du site Web pour déterminer si le site Web est actuellement accessible (200), et sinon, l'exclusion (300) du site Web d'une analyse supplémentaire.

6. Procédé selon la revendication 1, l'identification d'expressions régulières dans le langage de balisage qui peuvent être des preuves de l'existence d'une fonctionnalité de commerce électronique associée à une boutique en ligne par analyse par rapport à un lexique prédéfini, comprenant l'analyse d'étiquettes méta, de références à des fichiers JavaScript, de feuilles de style, d'étiquettes de script intégré, de références d'image et de texte qui apparaît sur une page Web.

7. Procédé selon la revendication 1, l'identification de liens vers d'autres pages qui sont susceptibles de contenir du contenu pertinent pour une fonctionnalité de commerce électronique associée à une boutique en ligne à partir d'étiquettes de langage de balisage, comprenant l'utilisation d'étiquettes d'ancrage.

8. Procédé selon la revendication 1, l'identification de liens vers d'autres pages qui sont susceptibles de contenir du contenu pertinent pour la fonctionnalité de commerce électronique associée à une boutique en ligne à partir d'étiquettes de langage de balisage, comprenant l'identification de liens navigués au moyen d'un événement tel qu'un événement de clic de toutes les autres étiquettes de langage de balisage.

9. Procédé selon la revendication 1, ladite fonctionnalité de commerce électronique associée à une boutique en ligne étant déterminée (5400) par des preuves de l'existence d'une fonctionnalité de panier d'achat.

10. Procédé selon la revendication 1, ladite fonctionnalité de commerce électronique associée à une boutique en ligne étant déterminée (5600) par des preuves de l'existence d'informations d'expédition.

11. Procédé selon la revendication 1, ladite fonctionnalité de commerce électronique associée à une boutique en ligne étant déterminée (5800) par des preuves de l'existence d'une plate-forme de paiement.

12. Procédé selon l'une quelconque des revendications 1 à 11, comprenant en outre un processus de pré-filtrage final pour exclure des catégories sélectionnées de sites Web d'une analyse supplémentaire (5900), sélectionnés par une entrée définie par l'utilisateur, des noms de domaine prédéterminés, des expressions régulières, du contenu de langage de balisage, des étiquettes méta de langage de balisage, et des données de texte ou d'image visibles prédéterminées.

13. Procédé selon l'une quelconque des revendications 1 à 12, la sortie de données décrivant uniquement ces sites Web qui ont été analysés et identifiés comme ayant des preuves de l'existence d'une fonctionnalité de commerce électronique (5930) associée à une boutique en ligne, comprenant la sortie desdites données vers une base de données pour analyse supplémentairee, comprenant les étapes supplémentaires de ;
détermination (7100) du fait qu'un site Web de commerce électronique particulier fonctionne dans le cadre d'une famille plus large de sites Web interdépendants considérés comme fonctionnant sous une seule entité d'entreprise, ou dans le but de générer des revenus combinés ; et/ou
classement (7400) d'un site Web particulier ou d'une famille plus large de sites Web interdépendants en termes de segment de commerçants et/ou en termes de chiffre d'affaires en ligne annualisé calculé ou estimé.

14. Système pour analyser une pluralité de sites Web, identifiés par un robot Web ou un agent logiciel, en analysant la façon dont des sites Web particuliers ont été créés et structurés pour identifier des sites Web de commerce électronique cibles avec une boutique en ligne qui ont été créés à l'aide d'une plate-forme de programmation personnalisée ou sur mesure, identifiée par un robot Web ou un agent logiciel, comprenant un processeur, une mémoire et des modules logiciels chargés dans la mémoire et configurés pour ;
analyser un localisateur de ressources uniformes (100, 4100) et des données d'en-tête associées (4500, 6102), des données de cookies (4400, 6101), des fichiers Javascript, des feuilles de style et des images identifiant un site Web particulier et toutes données de descripteur n'incluant pas de contenu de site Web en chargeant l'un quelconque ou plusieurs parmi des en-têtes de protocole de routage, cookies, fichiers et images associés aux identifiants de site Web en mémoire pour une analyse supplémentairee (5000) pour trouver des preuves de l'existence d'une fonctionnalité de commerce électronique associée à une boutique en ligne ;
dans un premier passage (200, 4200), déterminer le fait que la fonctionnalité de commerce électronique de boutique en ligne est susceptible d'être prise en charge ou non par le site Web sur la base de ladite analyse, ou si le site Web doit être exclu (4300, 5920) d'une analyse supplémentaire ;
dans un second passage, analyser le contenu en langage de balisage (4600, 5100) extrait d'une ou plusieurs pages du site Web pour collecter des preuves d'une ou plusieurs fonctionnalités de commerce électronique associées à une boutique en ligne, comprenant ;
l'identification d'expressions régulières à partir de données d'étiquette de corps de langage de balisage associées à une fonctionnalité de commerce électronique associée à une boutique en ligne ;
l'identification de liens vers d'autres pages susceptibles de contenir du contenu pertinent pour la fonctionnalité de commerce électronique associée à une boutique en ligne à partir d'étiquettes de langage de balisage ;
l'identification d'étiquettes de script intégrées reliant une fonctionnalité de commerce électronique associée à une boutique en ligne ;
l'identification de noeuds de corps dans le langage de balisage à l'aide de requêtes de syntaxe de langage de chemin XML ou de requêtes de sélecteur JQuery pertinentes pour la fonctionnalité de commerce électronique associée à une boutique en ligne ;
l'identification d'expressions régulières dans le langage de balisage qui peuvent être des preuves de l'existence d'une fonctionnalité de commerce électronique par analyse par rapport à un lexique prédéfini ; et
un système client pour recevoir des données de sortie décrivant uniquement ces sites Web qui ont été analysés et identifiés comme ayant des preuves de l'existence d'une fonctionnalité de commerce électronique (5930) associée à une boutique en ligne qui ont été créés à l'aide d'une plate-forme de programmation personnalisée ou sur mesure (7000, 8000) .

15. Programme informatique qui, lors de son exécution sur un processeur, effectue le procédé selon l'une quelconque des revendications 1 à 13.

16. Programme informatique selon la revendication 15, lorsqu'il est stocké sur un support de stockage lisible par ordinateur.
